# EUROPEAN PATENT APPLICATION

(11) **EP 2 184 303 A1**
(43) Date of publication of application: **12.05.2010**
(21) Application number: 08792620.0
(22) Date of filing: 21.08.2008
(51) Int. Cl.: C08F 220/36

(54) **COPOLYMER**

(30) Priority: 30.08.2007 JP 2007223347; 12.05.2008 JP 2008125203
(71) Applicant: Daicel Chemical Industries, Ltd., Kita-ku Osaka-shi Osaka 530-0001 (JP)
(72) Inventor: NIJUKKEN, Toshihiko, Himeji-shi Hyogo 671-1283 (JP); NAKAGAWA, Yasunobu, Himeji-shi Hyogo 671-1283 (JP)
(74) Representative: Grünecker, Kinkeldey, Stockmair & Schwanhäusser Anwaltssozietät
(86) International application number: PCT/JP2008/064899
(87) International publication number: WO 2009/028392

(57) **Abstract**

Disclosed is a copolymer which includes at least monomer units corresponding to a vinyl monomer A containing a blocked isocyanate group and represented by following Formula (1); and monomer units corresponding to a vinyl monomer B containing a cyclic ether group having 3 to 5 members. The copolymer may further include monomer units corresponding to (meth)acrylic alkyl esters, aromatic vinyl compounds, hydroxyl-containing monomers, and/or carboxyl-containing monomers. In the formula, R¹ represents hydrogen atom or methyl group; R² represents a bivalent saturated aliphatic hydrocarbon group having 1 to 8 carbon atoms; and R³ represents a residue of isocyanate-blocking agent R³H. This copolymer gives a cured article that excels not only in adhesion to substrates but also in resistance to chemicals, especially to alkalis.

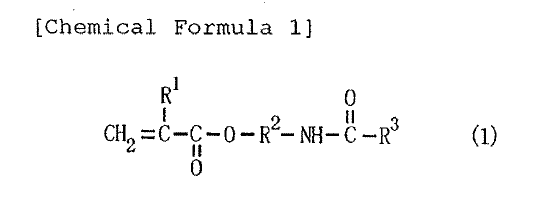

## Description

### Technical Field

The present invention relates to copolymers containing blocked isocyanate groups and cyclic ether groups. The copolymers according to the present invention are usable as coating materials, coating agents, pressure-sensitive adhesives and other adhesives, and are applicable to electronic materials such as protective films and sealing materials (encapsulating materials).

### Background Art

Exemplary known compositions that can give cured coatings through curing by the action of heat or light (radiation) include a curable resin composition containing a polymer having epoxy groups in side chains; a curable resin composition containing a polymer having isocyanate groups in side chains; and a curable resin composition containing a polymer having alkoxysilane groups and further containing, for example, an acid, base, or organic metal catalyst. These curable resin compositions, however, do not give cured coatings that satisfy all requirements such as curability, adhesion to substrates, resistance to chemicals, and storage stability.

Japanese Unexamined Patent Application Publication (JP-A) No. H01-123817 discloses a curable composition which contains a copolymer in combination with a chelate compound and a compound having a multifunctional alicyclic oxirane group, in which the copolymer contains an alkoxysilane-containing vinyl monomer and an oxirane-containing vinyl monomer as monomer components. This composition is intended to give a curing article having improved properties. The curable composition can undergo crosslinking at low temperatures and gives a cured article excellent in properties. However, the resulting cured coating obtained from the curable composition is insufficient in properties relating to resistance to chemicals, particularly to alkalis.

Patent Document 1: Japanese Unexamined Patent Application Publication (JP-A) No. H01(1989)-123817

### Disclosure of Invention

### Problems to Be Solved by the Invention

An object of the present invention is to provide a copolymer that can give a cured article excellent in adhesion to substrates and also in resistance to chemicals, especially to alkalis.

### Means to Solve the Problems

After intensive investigations to achieve the above object, the present inventors have found that a cured article that excels in adhesion to substrates and has superior resistance to chemicals, especially to alkalis, can be obtained by applying a curable resin composition to a substrate and curing the applied curable resin composition, in which the curable resin composition contains a copolymer derived from a vinyl monomer having a blocked isocyanate group and from a vinyl monomer having a cyclic ether group such as epoxy group. The present invention has been made based on these findings.

Specifically, the present invention provides a copolymer which includes at least monomer units corresponding to a vinyl monomer A and monomer units corresponding to a vinyl monomer B, in which the vinyl monomer A contains a blocked isocyanate group and is represented by following Formula (1): 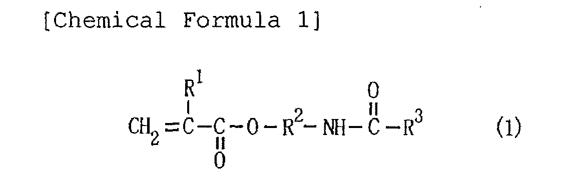 wherein R¹ represents hydrogen atom or methyl group; R² represents a bivalent saturated aliphatic hydrocarbon group having 1 to 8 carbon atoms; and R³ represents a residue of an isocyanate-blocking agent R³H, and the vinyl monomer B contains a cyclic ether group having 3 to 5 members.

The copolymer may further include monomer units corresponding to at least one monomer selected from the group consisting of (meth)acrylic esters, aromatic vinyl compounds, hydroxyl-containing monomers, and carboxyl-containing monomers, in addition to the monomer units corresponding to the vinyl monomer A and the monomer units corresponding to the vinyl monomer B, in which the (meth)acrylic esters are each represented by following Formula (2): 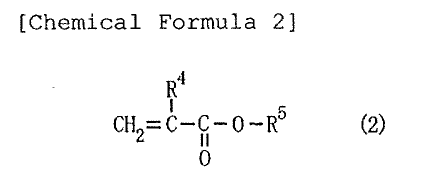 wherein R⁴ represents hydrogen atom or methyl group; and R⁵ represents a hydrocarbon group which has 1 to 15 carbon atoms and which may have a hydrocarbon-substituted oxy group. Advantages

Curable resin compositions containing the copolymers according to the present invention, when cured, give cured articles (such as cured films) that show high adhesion to substrates or carriers and excel in resistance to chemicals such as solvents and alkalis. The curable resin compositions containing the copolymers excel also in curability and storage stability and are therefore usable typically as coating materials, coating agents, pressure-sensitive adhesives and other adhesives and are advantageously adopted particularly to electronic materials. Best Mode for Carrying Out the Invention

Copolymer according to the present invention include at least monomer units corresponding to a vinyl monomer A and monomer units corresponding to a vinyl monomer B, in which the vinyl monomer A contains a blocked isocyanate group (hereinafter also referred to as "block isocyanate group") and is represented by Formula (1), and the vinyl monomer B contains a cyclic ether group having 3 to 5 members. The block isocyanate group is deblocked by the action of heat to give an active isocyanate group. A curable resin composition containing this copolymer, when cured by the action of heat or active energy rays, gives a cured article that excels in various properties, especially in adhesion to substrates and resistance to chemicals. This is because the isocyanate group and the cyclic ether group having 3 to 5 members contribute to curing.

In the monomer A represented by Formula (1), R¹ represents hydrogen atom or methyl group; R² represents a bivalent saturated aliphatic hydrocarbon group having 1 to 8 carbon atoms; and R³ represents a residue of an isocyanate-blocking agent R³H.

Exemplary bivalent saturated aliphatic hydrocarbon groups halving 1 to 8 carbon atoms as R² include linear or branched-chain bivalent saturated aliphatic hydrocarbon groups (alkylene groups) such as methylene, ethylene, trimethylene, propylene, tetramethylene, pentamethylene, hexamethylene, heptamethylene, and octamethylene groups. Of these, bivalent saturated aliphatic hydrocarbon groups having 2 to 4 carbon atoms, such as ethylene, trimethylene, and propylene groups, are preferred.

The isocyanate-blocking agent R³H can be any of known isocyanate-blocking agents, and examples thereof include oxime blocking agents such as formaldoxime, acetaldoxime, acetoxime, methyl ethyl ketoxime, methyl isobutyl ketoxime, diethyl ketoxime, cyclohexanone oxime, diacetyl monoxime, and benzophenone oxime; pyrazole blocking agents such as 3,5-dimethylpyrazole; alcohol blocking agents such as methanol and ethanol; phenolic blocking agents such as phenol and cresol; mercaptan blocking agents such as butyl mercaptan; acid amide blocking agents such as acetanilide, ε-caprolactam, and γ-butyrolactam; active methylene blocking agents such as dimethyl malonate and methyl acetoacetate; imide blocking agents such as succinimide and maleimide; urea blocking agents; carbamate blocking agents such as N-phenylcarbamate; amine blocking agents such as diphenyl amine and aniline; and imine blocking agents such as ethyleneimine and polyethyleneimine.

Of isocyanate-blocking agents, such highly stable blocking agents as not to cause gelation in production line of the curable resin composition are preferred. The deblocking temperature of the blocking agent is, for example, from 100°C to 300°C, and preferably from 150°C to 250°C. Of the above blocking agents, oxime blocking agents and pyrazole blocking agents are preferred.

Among them, especially preferred blocking agents include oxime blocking agents each represented by following Formula (3): 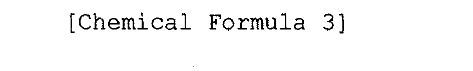 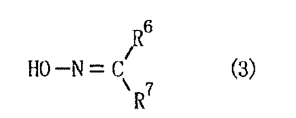 wherein R⁶ and R⁷ are the same as or different from each other and each represent an alkyl group having 1 to 8 carbon atoms, where R⁶ and R⁷ may be combined to form a ring together with the adjacent carbon atom.

Exemplary alkyl groups having 1 to 8 carbon atoms as R⁶ and R⁷ include linear or branched-chain alkyl groups such as methyl, ethyl, propyl, isopropyl, butyl, isobutyl, s-butyl, t-butyl, pentyl, hexyl, and octyl groups. Of these, preferred are linear or branched-chain alkyl groups having 1 to 4 carbon atoms, such as methyl, ethyl, and propyl groups. Examples of the ring formed by R⁶ and R⁷ together with the adjacent carbon atom include cycloalkane rings having about 3 to about 12 members, such as cyclobutane ring, cyclopentane ring, and cyclohexane ring, of which those having 5 or 6 members are preferred.

Representative examples of the vinyl monomer A represented by Formula (1) include 2-[O-(1'-methylpropylideneamino)carboxyamino]ethyl methacrylate (i.e., 2-(1-methylpropylideneaminooxycarbonylaminoethyl) methacrylate) [trade name "Karenz MOI-BM", supplied by Showa Denko K. K., represented by following Formula (1a)] and 2-(3,5-dimethylpyrazol-1-yl)carbonylaminoethyl methacrylate [trade name "Karenz MOI-BP", supplied by Showa Denko K. K., represented by following Formula (1b)]. The product under the trade name "Karenz MOI-BM" has a 50% deblocking temperature of 130°C and a 90% deblocking temperature of 150°C. The product under the trade name "Karenz MOI-BP" has a 50% deblocking temperature of 100°C and a 90% deblocking temperature of 120°C.

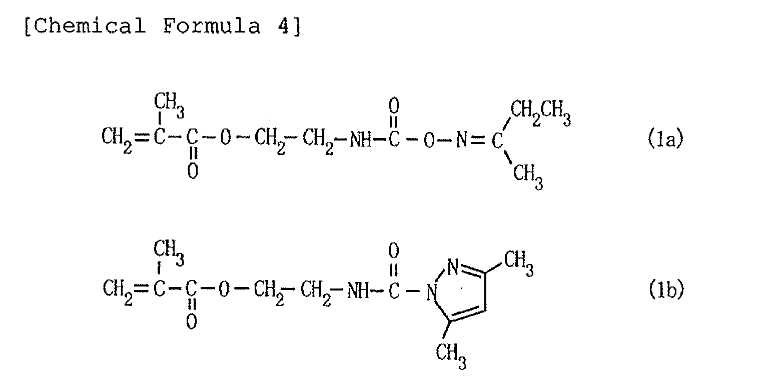

In the copolymers according to the present invention, the deblocking of the monomer units corresponding to the vinyl monomer A represented by Formula (1) proceeds in the following manner. Isocyanate groups formed as a result of the deblocking act as curable groups. The isocyanate groups mainly contribute to improvement in adhesion to substrates.

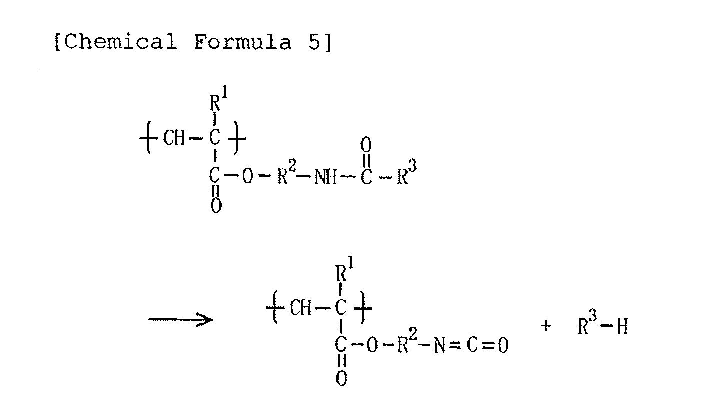

Examples of the vinyl monomer B containing a cyclic ether group having 3 to 5 members include polymerizable unsaturated compounds containing oxirane ring (epoxy group); polymerizable unsaturated compounds containing oxetane ring (oxetanyl group); and polymerizable unsaturated compounds containing oxolane ring (oxolanyl group).

Exemplary polymerizable unsaturated compounds containing oxirane ring (epoxy group) include polymerizable unsaturated compounds (including (meth)acrylic ester derivatives) containing oxirane ring (monocyclic ring), such as oxiranyl (meth)acrylates, glycidyl (meth)acrylates, 2-methylglycidyl (meth)acrylates, 2-ethylglycidyl (meth)acrylates, 2-oxiranylethyl (meth)acrylates, 2-glycidyloxyethyl (meth)acrylates, 3-glycidyloxypropyl (meth)acrylates, and glycidyloxyphenyl (meth)acrylates; polymerizable unsaturated compounds (including (meth)acrylic ester derivatives) containing 3,4-epoxycyclohexane ring or another epoxy-containing alicyclic carbon ring, such as 3,4-epoxycyclohexyl (meth)acrylates, 3,4-epoxycyclohexylmethyl (meth)acrylates, 2-(3,4-epoxycyclohexyl)ethyl (meth)acrylates, 2-(3,4-epoxycyclohexylmethyloxy)ethyl (meth)acrylates, and 3-(3,4-epoxycyclohexylmethyloxy)propyl (meth)acrylates; polymerizable unsaturated compounds (including (meth)acrylic ester derivatives) containing 5,6-epoxy-2-bicyclo[2.2.1]heptane ring, such as 5,6-epoxy-2-bicyclo[2.2.1]heptyl (meth)acrylates; epoxidized dicyclopentenyl (meth)acrylates [3,4-epoxytricyclo[5.2.1.0^{2,6}]dec-9-yl (meth)acrylates; polymerizable unsaturated compounds (including (meth)acrylic ester derivatives) containing 3,4-epoxytricyclo[5.2.1.0^{2,6}]decane ring, such as 3,4-epoxytricyclo[5.2.1.0^{2,6}]dec-8-yl (meth)acrylates], epoxidized dicyclopentenyloxyethyl (meth)acrylates [2-(3,4-epoxytricyclo[5.2.1.0^{2,6}]dec-9-yloxy)ethyl (meth)acrylates; and 2-(3,4-epoxytricyclo[5.2.1.0^{2,6}]dec-8-yloxy)ethyl (meth)acrylates], epoxidized dicyclopentenyloxybutyl (meth)acrylates, and epoxidized dicyclopentenyloxyhexyl (meth)acrylates. Exemplary polymerizable unsaturated compounds containing oxirane ring (epoxy group) further include vinyl ether compounds containing epoxy group, and allyl ether compounds containing epoxy group.

Exemplary polymerizable unsaturated compounds containing oxetane ring (oxetanyl group) include oxetanyl (meth)acrylates, 3-methyl-3-oxetanyl (meth)acrylates, 3-ethyl-3-oxetanyl (meth)acrylates, (3-methyl-3-oxetanyl)methyl (meth)acrylates, (3-ethyl-3-oxetanyl)methyl (meth)acrylates, 2-(3-methyl-3-oxetanyl)ethyl (meth)acrylates, 2-(3-ethyl-3-oxetanyl)ethyl (meth)acrylates, 2-[(3-methyl-3-oxetanyl)methyloxy]ethyl (meth)acrylates, 2-[(3-ethyl-3-oxetanyl)methyloxy]ethyl (meth)acrylates, 3-[(3-methyl-3-oxetanyl)methyloxy]propyl (meth)acrylates, and 3-[(3-ethyl-3-oxetanyl)methyloxy]propyl (meth)acrylates, as well as vinyl ether compounds containing oxetanyl group, and allyl ether compounds containing oxetanyl group.

Exemplary polymerizable unsaturated compounds containing oxolane ring (oxolanyl group) include tetrahydrofurfuryl (meth)acrylates, vinyl ether compounds containing oxolanyl group, and allyl ether compounds containing oxolanyl group.

In the copolymers according to the present invention, the cyclic ether group having 3 to 5 members [oxirane ring (epoxy group), oxetane ring (oxetanyl group), or oxolane ring (oxolanyl group)] acts as a curable group. The cyclic ether group having 3 to 5 members mainly contributes to improvements in resistance to chemicals such as solvents and alkalis.

The copolymers may contain each of different monomer units corresponding to the vinyl monomer A alone or in combination and each of different monomer units corresponding to the vinyl monomer B alone or in combination. Typically, a copolymer according to an embodiment of the present invention may include, as the monomer units corresponding to the vinyl monomer B, monomer units corresponding to a monocyclic oxirane-ring-containing polymerizable unsaturated compound (including a (meth)acrylic ester derivative) in combination with monomer units corresponding to a polymerizable unsaturated compound (including a (meth)acrylic ester derivative) containing an epoxy-containing alicyclic carbon ring such as 3,4-epoxycyclohexane ring.

The content of monomer units corresponding to the vinyl monomer A in the copolymers is, for example, from 1 to 95 percent by weight, preferably from 3 to 70 percent by weight, and more preferably from 5 to 50 percent by weight. If this content is excessively small, the resulting cured article may be apt to have insufficient adhesion to substrates, and if it is excessively large, the cured article may be apt to have insufficient resistance to chemicals, because the content of monomer units corresponding to the vinyl monomer B becomes relatively small.

The content of monomer units corresponding to the vinyl monomer B in the copolymers is, for example, from 5 to 99 percent by weight, preferably from 30 to 97 percent by weight, and more preferably from 50 to 95 percent by weight. If this content is excessively small, the cured article may be apt to have insufficient resistance to chemicals, and if it is excessively large, the cured article may be apt to have insufficient adhesion to substrates, because the content of monomer units corresponding to the vinyl monomer A becomes relatively small.

The total content of monomer units corresponding to the vinyl monomer A and monomer units corresponding to the vinyl monomer B in the copolymers is, for example, from 40 percent by weight to 100 percent by weight, preferably from 50 to 100 percent by weight, and more preferably from 60 to 100 percent by weight.

In the copolymers according to the present invention, the ratio between monomer units corresponding to the vinyl monomer A and monomer units corresponding to the vinyl monomer B is such that the ratio (by weight) of the former to the latter is, for example, from about 1:99 to about 99:1, preferably from about 3:97 to about 70:30, and more preferably from about 5:95 to about 50:50.

The copolymers according to the present invention may include monomer units corresponding to the vinyl monomer A and monomer units corresponding to the vinyl monomer B, but may further include additional monomer units, in addition to monomer units corresponding to the vinyl monomer A and monomer units corresponding to the vinyl monomer B. The additional monomer units are not especially limited, as long as being monomer units corresponding to a polymerizable monomer copolymerizable with the vinyl monomer A and vinyl monomer B and being such structural units as not to adversely affect the adhesion to substrates and resistance to chemicals.

Exemplary monomers that can form additional monomer units which the copolymers may contain include (meth)acrylic esters represented by Formula (2), aromatic vinyl compounds, hydroxyl-containing monomers, and carboxyl-containing monomers. Each of different additional monomers can be used alone or in combination.

In the (meth)acrylic esters represented by Formula (2), R⁴ represents hydrogen atom or methyl group; and R⁵ represents a hydrocarbon group which has 1 to 15 carbon atoms and which may have a hydrocarbon-substituted oxy group. The hydrocarbon group as R⁵ preferably has 1 to 12 carbon atoms. Exemplary hydrocarbon groups having 1 to 15 carbon atoms as R⁵ include alkyl groups such as methyl, ethyl, propyl, isopropyl, butyl, isobutyl, s-butyl, t-butyl, pentyl, hexyl, octyl, 2-ethylhexyl, and decyl groups; alicyclic hydrocarbon groups such as cyclohexyl, dicyclopentanyl, and isobornyl groups; aryl groups such as phenyl group; aralkyl groups such as benzyl, 1-phenylethyl, and 2-phenylethyl groups; and groups each including two or more of these combined with each other.

Exemplary hydrocarbon-substituted oxy groups which the hydrocarbon group having 1 to 15 carbon atoms may have include hydrocarbon-substituted oxy groups having 1 to 15 carbon atoms (of which those having 1 to 12 carbon atoms are preferred), including alkoxy groups such as methoxy and ethoxy groups (of which alkoxy groups having 1 to 10 carbon atoms are preferred); aryloxy groups such as phenoxy group; alicyclic-hydrocarbon-substituted oxy groups such as cyclohexyloxy group and dicyclopentanyloxy group; and aralkyloxy groups such as benzyloxy group.

Representative examples of the (meth)acrylic esters represented by Formula (2) include methyl (meth)acrylates, ethyl (meth)acrylates, butyl (meth)acrylates, 2-ethylhexyl (meth)acrylates, phenyl (meth)acrylates, cyclohexyl (meth)acrylates, dicyclopentanyl (meth)acrylates, dicyclopentanyloxyethyl (meth)acrylates, isobornyl (meth)acrylates, benzyl (meth)acrylates, and phenylethyl (meth)acrylates.

Exemplary aromatic vinyl compounds include styrene, α-methylstyrene, vinyltoluene, vinylnaphthalene, and vinylbiphenyl.

Exemplary hydroxyl-containing monomers include hydroxyalkyl (meth)acrylates such as 2-hydroxyethyl (meth)acrylates, hydroxypropyl (meth)acrylates, 2,3-dihydroxybutyl (meth)acrylates, 4-hydroxybutyl (meth)acrylates, 6-hydroxyhexyl (meth)acrylates, and 8-hydroxyoctyl (meth)acrylates; monoesterifed products between a polyhydric alcohol and acrylic acid or methacrylic acid, such as 4-hydroxymethylcyclohexyl (meth)acrylates and polyalkylene glycol mono(meth)acrylates; compounds prepared through ring-opening polymerization of ε-caprolactone with the monoesterified products between a polyhydric alcohol and acrylic acid or methacrylic acid (e.g., PLACCEL FA series and PLACCEL FM series each supplied by Daicel Chemical Industries, Ltd.); and hydroxyl-containing compounds prepared through the ring-opening polymerization of ethylene oxide or propylene oxide with the monoesterified products between a polyhydric alcohol and acrylic acid or methacrylic acid.

Exemplary carboxyl-containing monomers include acrylic acid and methacrylic acid.

The content of monomer units corresponding to at least one monomer selected from the group consisting of (meth)acrylic esters represented by Formula (2), aromatic vinyl compounds, hydroxyl-containing monomers, and carboxyl-containing monomers is generally from 0 to 60 percent by weight (for example, from 5 to 60 percent by weight), preferably from 0 to 50 percent by weight (for example, from 5 to 50 percent by weight), and more preferably from 0 to 40 percent by weight (for example, from 5 to 40 percent by weight).

Preferred embodiments of copolymers according to the present invention include (i) copolymers which include monomer units corresponding to the vinyl monomer A and monomer units corresponding to the vinyl monomer B in a total content of 50 percent by weight or more (especially preferably 60 percent by weight or more) of the total monomer units; (ii) copolymers which further include, in addition to monomer units corresponding to the vinyl monomer A and monomer units corresponding to the vinyl monomer B, monomer units corresponding to one or more (meth)acrylic esters represented by Formula (2) (of which methyl methacrylate is preferred) in a content of from 5 to 60 percent by weight (preferably from 5 to 50 percent by weight, and more preferably from 5 to 40 percent by weight) of the total monomer units; (iii) copolymers which further include, in addition to monomer units corresponding to the vinyl monomer A and monomer units corresponding to the vinyl monomer B, monomer units corresponding to one or more hydroxyl-containing monomers in a content of from 5 to 60 percent by weight (preferably from 5 to 50 percent by weight, and more preferably from 5 to 40 percent by weight) of the total monomer units; and (iv) copolymers which further include, in addition to monomer units corresponding to the vinyl monomer A and monomer units corresponding to the vinyl monomer B, monomer units corresponding to one or more carboxyl-containing monomers in a content of from 5 to 60 percent by weight (preferably from 5 to 50 percent by weight, and more preferably from 5 to 40 percent by weight) of the total monomer units.

Copolymers according to the present invention can be produced by subjecting a monomer mixture to polymerization (copolymerization), which monomer mixture contains one or more vinyl monomers A represented by Formula (1) and contains a blocked isocyanate group, one or more vinyl monomers B containing a cyclic ether group having 3 to 5 members, and, where necessary, one or more other copolymerizable monomers.

Regular radical initiators can be used as polymerization initiators in the polymerization. Examples thereof include azo compounds such as 2,2'-azobisisobutyronitrile, 2,2'-azobis(2,4-dimethylvaleronitrile), 2,2'-azobis(4-methoxy-2,4-dimethylvaleronitrile), dimethyl-2,2'-azobis(2-methylpropionate), dimethyl 2,2-azobis(isobutyrate), diethyl-2,2'-azobis(2-methylpropionate), and dibutyl-2,2'-azobis(2-methylpropionate); organic peroxides such as benzoyl peroxide, lauroyl peroxide, t-butyl peroxypivalate, and 1,1-bis(t-butylperoxy)cyclohexane; and hydrogen peroxide. A peroxide, when used as a radical polymerization initiator, may be used in combination with a reducing agent to form a redox initiator. Of these initiators, azo compounds are preferred, of which 2,2'-azobisisobutyronitrile, 2,2'-azobis(2,4-dimethylvaleronitrile), and dimethyl 2,2-azobis(isobutyrate) are more preferred.

The amount of polymerization initiators is generally from about 1 to about 30 percent by weight, and preferably from about 5 to about 25 percent by weight, of the total amounts of total monomer components and polymerization initiators, though it can be suitably chosen within ranges not impeding smooth copolymerization.

Regular chain transfer agents may be additionally used herein in the radical polymerization. Exemplary chain transfer agents include thiols (such as n-dodecyl mercaptan, n-octyl mercaptan, n-butyl mercaptan, tert-butyl mercaptan, n-lauryl mercaptan, mercaptoethanol, mercaptopropanol, and triethylene glycol dimercaptan) thiolic acids (such as mercaptopropionic acid, thiobenzoic acid, thioglycolic acid, and thiomalic acid), alcohols (such as isopropyl alcohol), amines (such as dibutylamine), hypophosphites (such as sodium hypophosphite), α-methylstyrene dimer, terpinolene, myrcene, limonene, α-pinene, and β-pinene. The amount of chain transfer agents is preferably from 0.001 to 3 percent by weight relative to the amount of total radically polymerizable monomers. Chain transfer agents, when used, are preferably mixed with polymerizable vinyl monomers in advance.

The polymerization can be performed according to a common procedure used in production of styrenic polymers and acrylic polymers, such as solution polymerization, bulk polymerization, suspension polymerization, bulk-suspension polymerization, or emulsion polymerization. Of these procedures, solution polymerization is preferred. The monomers and polymerization initiators may be respectively supplied to the reaction system at once, or part or all of them may be added dropwise to the reaction system. For example, the polymerization may be performed typically by a process of adding a solution of the polymerization initiators in a polymerization solvent dropwise to a mixture of the monomers and the polymerization solvent held at a predetermined temperature; or by a process (dropping polymerization process) of preparing a solution of the monomers and polymerization initiators in a polymerization solvent and adding the prepared solution dropwise to the polymerization solvent held at a predetermined temperature.

The polymerization solvent can be suitably chosen according typically to the monomer composition. Exemplary polymerization solvents include ethers (e.g., diethyl ether; chain ethers including glycol ethers such as ethylene glycol mono- or di-alkyl ethers, diethylene glycol mono- or di-alkyl ethers, propylene glycol mono- or di-alkyl ethers, propylene glycol mono- or di-aryl ethers, dipropylene glycol mono- or di-alkyl ethers, tripropylene glycol mono- or di-alkyl ethers, 1,3-propanediol mono- or di-alkyl ethers, 1,3-butanediol mono- or di-alkyl ethers, 1,4-butanediol mono- or di-alkyl ethers, and glycerol mono-, di-, or tri-alkyl ethers; and cyclic ethers such as tetrahydrofuran and dioxane), esters (e.g., carboxylic esters such as methyl acetate, ethyl acetate, butyl acetate, isoamyl acetate, ethyl lactate, methyl 3-methoxypropionate, ethyl 3-ethoxypropionate, cycloalkanediol mono- or di-acetates whose cycloalkane moiety having 5 or 6 carbon atoms, and cycloalkanedimethanol mono- or di-acetates whose cycloalkane moiety having 5 or 6 carbon atoms; glycol acetates or glycol ether acetates such as ethylene glycol monoalkyl ether acetates, ethylene glycol mono- or di-acetate, diethylene glycol monoalkyl ether acetates, diethylene glycol mono- or di-acetate, propylene glycol monoalkyl ether acetates, propylene glycol mono- or di-acetate, dipropylene glycol monoalkyl ether acetates, dipropylene glycol mono- or di-acetate, 1,3-propanediol monoalkyl ether acetates, 1,3-propanediol mono- or di-acetate, 1,3-butanediol monoalkyl ether acetates, 1,3-butanediol mono- or di-acetate, 1,4-butanediol monoalkyl ether acetates, 1,4-butanediol mono- or di-acetate, glycerol mono-, di-, or tri-acetate, glycerol mono- or di-alkyl ether di- or mono-acetates whose alkyl moiety having 1 to 4 carbon atoms, tripropylene glycol monoalkyl ether acetates, and tripropylene glycol mono- or di-acetate), ketones (e.g., acetone, methyl ethyl ketone, methyl isobutyl ketone, cyclohexanone, and 3,5,5-trimethyl-2-cyclohexen-1-one), amides (e.g., N,N-dimethylacetamide, and N,N-dimethylformamide), sulfoxides (e.g., dimethyl sulfoxide), alcohols (e.g., methanol, ethanol, propanol, cycloalkanediols whose cycloalkane moiety having 5 or 6 carbon atoms, and cycloalkanedimethanols whose cyclolakane moiety having 5 or 6 carbon atoms), hydrocarbons (e.g., aromatic hydrocarbons such as benzene, toluene, and xylenes; aliphatic hydrocarbons such as hexane; and alicyclic hydrocarbons such as cyclohexane), and mixtures of these solvents. The polymerization temperature can be suitably chosen within a range typically of from about 30°C to about 150°C.

The copolymers according to the present invention are prepared in the above manner. The copolymers have weight-average molecular weights of, for example, from about 500 to about 100000, preferably from about 1000 to about 40000, and more preferably from about 2000 to about 30000 and polydispersities (the ratios of weight-average molecular weight Mw to number-average molecular weight Mn) of from about 1 to about 3.

A curable resin composition can be obtained by subjecting the polymerization reaction mixture prepared as above to solids content adjustment, solvent exchange, and/or filtration treatment according to necessity, and further combining with additional components according to necessity. Exemplary other components include curing catalysts [including heat-activatable acid generators such as thermal curing catalysts and thermal cationic polymerization initiators, and light-activatable acid generators such as photo-curing catalysts and photo cationic polymerization initiators], curing agents, accelerators, and additives such as fillers, defoaming agents, flame retardants, antioxidants, ultraviolet-absorbers, stress reducing agents, flexibility imparting agents, waxes, resins, crosslinking agents, halogen trapping agents, leveling agents, and wettability improvers. Such a curable resin composition can also be obtained by purifying the polymerized polymer typically through precipitation or reprecipitation, and dissolving the purified polymer with suitable additives and other components as mentioned above in a solvent according to the intended use.

Of the curing catalysts, examples of the heat-activatable acid generators include diazonium salts, iodonium salts, sulfonium salts, phosphonium salts, selenium salts, oxonium salts, and ammonium salts, and these are represented by the products supplied by Sanshin Chemical Industry Co., Ltd. under the trade names San-Aid SI-45, San-Aid SI-47, San-Aid SI-60, San-Aid SI-60L, San-Aid SI-80, San-Aid SI-80L, San-Aid SI-100, San-Aid SI-100L, San-Aid SI-145, San-Aid SI-150, San-Aid SI-160, San-Aid SI-110L, and San-Aid SI-180L; the products supplied by Nippon Soda Co., Ltd. under the trade names CI-2921, CI-2920, C-2946, CI-3128, CI-2624, CI-2639, and CI-2064; the products supplied by ADEKA CORPORATION under the trade names CP-66 and CP-77; and the product supplied by 3M Company under the trade name FC-520.

Examples of the light-activatable acid generators include diazonium salts, iodonium salts, sulfonium salts, phosphonium salts, selenium salts, oxonium salts, and ammonium salts; and these are represented by the products supplied by Union Carbide Corporation (The Dow Chemical Company), U.S.A. under the trade names CYRACURE UVI-6970, CYRACURE UVI-6974, CYRACURE UVI-6990, and CYRACURE UVI-950; the product supplied by Ciba Specialty Chemicals Corporation under the trade name IRGACURE 261; the products supplied by ADEKA CORPORATION under the trade names SP-150, SP-151, SP-170, and OPTMER SP-171; the product supplied by Ciba Specialty Chemicals Corporation under the trade name CG-24-61; the product supplied by Daicel Chemical Industries, Ltd. under the trade name DAICAT II; the product supplied by Daicel-Cytec Co., Ltd. under the trade name UVAC 1591; the products supplied by Nippon Soda Co., Ltd. under the trade names CI-2064, CI-2639, CI-2624, CI-2481, CI-2734, CI-2855, CI-2823, and CI-2758; the product supplied by Rhône-Poulenc (Rhodia) under the trade name PI-2074 (toluyl-cumyl iodonium salt of pentafluorophenyl borate); the product supplied by 3M Company under the trade name FFC 509; the products supplied by Midori Kagaku Co., Ltd. under the trade names BBI-102, BBI-101, BBI-103, MPI-103, TPS-103, MDS-103, DTS-103, NAT-103, and NDS-103; and the product supplied by Sartomer Company, Inc., U.S.A. under the trade name CD-1012.

The amount of curing catalysts is, for example, from 0.05 to 10 percent by weight, and preferably from 0.5 to 5 percent by weight, relative to the copolymer (resin component) in the curable resin composition. Each of different curing catalysts can be used alone or in combination.

The curable resin composition thus obtained, when cured, gives a cured article (such as a cured film) that shows high adhesion to substrates or carriers and has superior resistance to chemicals such as solvents and alkalis. The curable resin composition is therefore useful typically as coating materials, coating agents, pressure-sensitive adhesives and other adhesives and can be especially advantageously adopted to electronic materials.

The curable resin composition, when cured, gives a cured article excellent in various properties. Typically, a cured article can be obtained by applying the curable resin composition to a substrate or carrier of every kind through a procedure typically using a spin coater or slit coater to give a coated film, and curing the coated film. Examples of the substrate or carrier include glass, ceramics, silicon wafers, metals, and plastics. The application (coating) typically using a spin coater or slit coater can be performed according to a known procedure.

The curing of the coated film is performed by heating, or by applying active energy rays to the coated film, or by applying active energy rays to the coated film and thereafter heating. When the curable resin composition is cured by the action of heat, the heating temperature may range from 50°C to 260°C, and preferably from 80°C to 240°C. When the curable resin composition is cured by the action of light (rays), the exposure (light application) is performed by using rays of light with various wavelengths, such as ultraviolet rays, X rays, γ-rays, i-rays, and excimer laser beams. The thickness of the cured coated film is generally from about 0.1 to about 40 µm, preferably from about 0.3 to about 20 µm, and more preferably from about 0.5 to about 10 µm, though it can be suitably chosen according to the intended use.

### EXAMPLES

The present invention will be illustrated in further detail with reference to several examples below. It should be noted, however, that these examples are never construed to limit the scope of the present invention. The weight-average molecular weights (in terms of polystyrene) and polydispersities (the ratios of the weight-average molecular weight Mw to the number-average molecular weight Mn) of prepared copolymers were measured under the following conditions:
Apparatus: Detector: RID-10A (Shimadzu Corporation) Pump: LC-10ADVP (Shimadzu Corporation) System Controller: SCL-10AVP (Shimadzu Corporation)
Degasser: DGU-14A (Shimadzu Corporation)
Autoinjector: SIL-10AF (Shimadzu Corporation)
Columns: three columns, i.e., Waters Styragel HR3, Styragel HR4, and Styragel HR5
Mobile Phase: THF (tetrahydrofuran)
Flow Rate: 1 mL/min.
Temperature: oven (40°C), RI (40°C)
Detector: RI POLARITY(+)
Sample Amount: 50 µL

### EXAMPLE 1

The inside of a 1-liter flask equipped with a reflux condenser, a dropping funnel, and a stirrer was purged with nitrogen stream in a suitable quantity to give a nitrogen atmosphere; 100 parts by weight of propylene glycol monomethyl ether acetate was placed in the flask and was heated to 80°C with stirring. Next, a solution was added dropwise into the flask over about 4 hours using a dropping pump. The solution had been prepared by dissolving 60 parts by weight of 3,4-epoxycyclohexylmethyl methacrylate (trade name "CYCLOMER M100", supplied by Daicel Chemical Industries, Ltd.) and 40 parts by weight of 2-[O-(1'-methylpropylideneamino)carboxyamino]ethyl methacrylate (trade name "Karenz MOI-BM", supplied by Showa Denko K. K.) in 30 parts by weight of propylene glycol monomethyl ether acetate. Independently, another solution was added dropwise into the flask over about 4 hours using another dropping pump. This solution had been prepared by dissolving 5 parts by weight of polymerization initiator 2,2'-azobis(2,4-dimethylvaleronitrile) in 90 parts by weight of propylene glycol monomethyl ether acetate. After the completion of dropwise addition of the polymerization initiator, the reaction mixture was held at the same temperature for about 4 hours, thereafter cooled to room temperature, and thereby yielded a copolymer solution having a solids content of 32.6 percent by weight. The prepared copolymer had a weight-average molecular weight Mw of 9000 and a polydispersity of 1.80.

### EXAMPLE 2

A copolymer solution having a solids content of 32.6 percent by weight was prepared by the procedure of Example 1, except for modifying the monomer composition to 60 parts by weight of 3,4-epoxycyclohexylmethyl methacrylate (trade name "CYCLOMER M100", supplied by Daicel Chemical Industries, Ltd.), 20 parts by weight of 2-[O-(1'-methylpropylideneamino)carboxyamino]ethyl methacrylate (trade name "Karenz MOI-BM", supplied by Showa Denko K. K.), and 20 parts by weight of 2-hydroxyethyl methacrylate (HEMA). The prepared copolymer had a weight-average molecular weight Mw of 9300 and a polydispersity of 1.86.

### EXAMPLE 3

A copolymer solution having a solids content of 32.6 percent by weight was prepared by the procedure of Example 1, except for modifying the monomer composition to 60 parts by weight of 3,4-epoxycyclohexylmethyl methacrylate (trade name "CYCLOMER M100", supplied by Daicel Chemical Industries, Ltd.), 20 parts by weight of 2-[O-(1'-methylpropylideneamino)carboxyamino]ethyl methacrylate (trade name "Karenz MOI-BM", supplied by Showa Denko K. K.), and 20 parts by weight of methyl methacrylate. The prepared copolymer had a weight-average molecular weight Mw of 9300 and a polydispersity of 1.86.

### EXAMPLE 4

A copolymer solution having a solids content of 32.6 percent by weight was prepared by the procedure of Example 1, except for modifying the monomer composition to 60 parts by weight of 3,4-epoxycyclohexylmethyl methacrylate (trade name "CYCLOMER M100", supplied by Daicel Chemical Industries, Ltd.), 20 parts by weight of 2-[O-(1'-methylpropylideneamino)carboxyamino]ethyl methacrylate (trade name "Karenz MOI-BM", supplied by Showa Denko K. K.), and 20 parts by weight of methacrylic acid. The prepared copolymer had a weight-average molecular weight Mw of 9300 and a polydispersity of 1.86.

### EXAMPLE 5

A copolymer solution having a solids content of 32.6 percent by weight was prepared by the procedure of Example 1, except for adopting glycidyl methacrylate as the epoxy-containing monomer instead of "CYCLOMER M100". The prepared copolymer had a weight-average molecular weight Mw of 9300 and a polydispersity of 1.86.

### EXAMPLE 6

A copolymer solution having a solids content of 32.5 percent by weight was prepared by the procedure of Example 1, except for adopting another monomer composition of 30 parts by weight of 3,4-epoxycyclohexylmethyl methacrylate (trade name "CYCLOMER M100", supplied by Daicel Chemical Industries, Ltd.), 30 parts by weight of glycidyl methacrylate, 20 parts by weight of 2-[O-(1'-methylpropylideneamino)carboxyamino]ethyl methacrylate (trade name "Karenz MOI-BM", supplied by Showa Denko K. K.), and 20 parts by weight of 2-hydroxyethyl methacrylate. The prepared copolymer had a weight-average molecular weight Mw of 9800 and a polydispersity of 1.80.

### COMPARATIVE EXAMPLE 1

A copolymer solution having a solids content of 32.3 percent by weight was prepared by the procedure of Example 1, except for adopting another monomer composition of 100 parts by weight of "CYCLOMER M100" alone. The prepared copolymer had a weight-average molecular weight Mw of 9800 and a polydispersity of 1.86.

### COMPARATIVE EXAMPLE 2

A copolymer solution having a solids content of 32.0 percent by weight was prepared by the procedure of Example 1, except for adopting another monomer composition of 100 parts by weight of "Karenz MOI-BM" alone. The prepared copolymer had a weight-average molecular weight Mw of 9500 and a polydispersity of 1.85.

### COMPARATIVE EXAMPLE 3

A copolymer solution having a solids content of 31.5 percent by weight was prepared by the procedure of Example 1, except for adopting another monomer composition of 60 parts by weight of 3,4-epoxycyclohexylmethyl methacrylate (trade name "CYCLOMER M100", supplied by Daicel Chemical Industries, Ltd.) and 40 parts by weight of γ-methacryloxypropyltrimethoxysilane (trade name "SZ 6030", supplied by Dow Corning Toray Co., Ltd.). The prepared copolymer had a weight-average molecular weight Mw of 9800 and a polydispersity of 1.85.

### Evaluation Tests

### (1) Preparation of Evaluation Test Pieces

Each of the copolymer solutions (curable resin compositions) prepared in the examples and comparative examples was applied to a substrate with a spin coater, heated on a hot plate at 100°C for 3 minutes, further heated in an oven at 80°C for 30 minutes, further heated in an oven at 220°C for 30 minutes, and thereby yielded evaluation test pieces. A glass plate and a stainless steel sheet were used as the substrate.

### (2) Adhesion

Peeling tests from the substrates were conducted in the examples and comparative examples at spots where solvent resistance tests had been conducted. The peeling tests were performed in accordance with Japanese Industrial Standards (JIS) K-5600-5-6. The adhesion was evaluated from the test results based on the following criteria according to the rating specified in "Classification of Test Results" in Table 1, 8.3 of JIS K5600-5-6.
A (Excellent): Test Results Classification "0".
B (Good): Test Results Classification "1".
C (Not good): Test Results Classification "2".
D (Poor): Test Results Classification "3" or "4".

### (3) Solvent Resistance

Each one drop of isopropyl alcohol (IPA), methyl ethyl ketone (MEK), and N-methylpyrrolidone (NMP) was respectively added dropwise to the evaluation test pieces prepared in the examples and comparative examples using the glass plate as the substrate, and the resulting test pieces were left stand for 10 minutes. The test pieces were then washed with water and observed. A test piece showing no change at a spot where the solvent had been added dropwise was evaluated as "A" (Excellent); one showing such a slight mark of the solvent as to be removable by wiping was evaluated as "B" (Good); one showing such a mark of the solvent as not to be removable by wiping was evaluated as "C" (Not good); and one underwent entire discoloration was evaluated as "D" (Failure). In this connection, the evaluation test pieces prepared by using the stainless steel sheet as the substrate respectively showed similar results to those of the test pieces prepared using the glass plate as the substrate.

### (4) Alkali Resistance

One drop of a 1 percent by weight aqueous sodium hydroxide solution was added dropwise to the evaluation test pieces prepared in the examples and comparative examples using the glass plate as the substrate, and the test pieces were left stand for 10 minutes. The test pieces were then washed with water and observed. A test piece showing no change at a spot where the 1 percent by weight aqueous sodium hydroxide solution had been added dropwise was evaluated as "A" (Excellent); one showing such a slight mark of the 1 percent by weight aqueous sodium hydroxide solution as to be removable by wiping was evaluated as "B" (Good); one showing such a mark of the 1 percent by weight aqueous sodium hydroxide solution as not to be removable by wiping was evaluated as "C" (Not good); and one underwent entire discoloration was evaluated as "D" (Poor).

The results of the evaluation tests are shown in Table 1 below.

**[Table 1]**

| | Example 1 | Example 2 | Example 3 | Example 4 | Example 5 | Example 6 | Com. Ex.1 | Com. Ex 2 | Com. Ex. 3 |
|---|---|---|---|---|---|---|---|---|---|
| Monomer composition (part by weight) | | | | | | | | | |
| CYCLOMER M100 | 60 | 60 | 60 | 60 | | 30 | 100 | | 60 |
| GMA | | | | | 60 | 30 | | | |
| Karenz MOI-BM | 40 | 20 | 20 | 20 | 40 | 20 | | 900 | |
| SZ 6030 | | | | | | | | | 40 |
| HEMA | | 20 | | | | 20 | | | |
| Methyl methacrylate | | | 20 | | | | | | |
| Methacrylic arid | | | | 20 | | | | | |
| Evaluations of cured coating | | | | | | | | | |
| Adhesion | | | | | | | | | |
| Glass | B | A | A | A | B | A | C | A | A |
| Stainless steel | A | A | A | A | A | A | D | A | A |
| Solvent resistance | | | | | | | | | |
| Isopropyl alcohol | A | A | A | A | A | A | A | A | A |
| Methyl ethyl ketone | A | A | A | A | A | A | A | C | B |
| N-Methylpyrolidone | B | A | B | A | A | A | B | D | C |
| Alkali resistance | A | A | A | A | A | A | A | B | D |

As apparent from the data in the table, the cured coatings prepared from the copolymer solutions according to the examples excel all the tested properties including adhesion to substrates (glass and stainless steel), solvent resistance, and alkali resistance. In contrast, the cured coating prepared from the copolymer solution according to Comparative Example 1 is inferior in adhesion to substrates; the cured coating prepared from the copolymer solution according to Comparative Example 2 is inferior in solvent resistance; and the cured coating prepared from the copolymer solution according to Comparative Example 3 is inferior in solvent resistance and alkali resistance. Industrial Applicability

Curable resin compositions containing the copolymers according to the present invention, when cured, can give cured articles (such as cured films) that show high adhesion to substrates and carriers and have superior resistance to chemicals such as solvents and alkalis. They are therefore usable typically as coating materials, coating agents, pressure-sensitive adhesives, and other adhesives and are particularly advantageously adopted to electronic materials.

## Claims

1. A copolymer at least comprising monomer units corresponding to a vinyl monomer A and monomer units corresponding to a vinyl monomer B, the vinyl monomer A containing a blocked isocyanate group and being represented by following Formula (1): 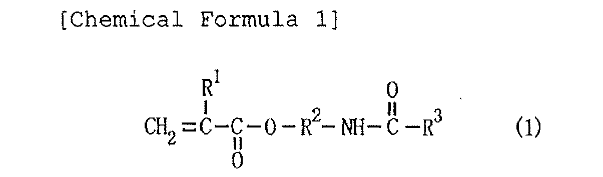 wherein R¹ represents hydrogen atom or methyl group; R² represents a bivalent saturated aliphatic hydrocarbon group having 1 to 8 carbon atoms; and R³ represents a residue of an isocyanate-blocking agent R³H, and the vinyl monomer B containing a cyclic ether group having 3 to 5 members.

2. The copolymer of claim 1, further comprising monomer units corresponding to at least one monomer selected from the group consisting of (meth)acrylic esters, aromatic vinyl compounds, hydroxyl-containing monomers, and carboxyl-containing monomers, in addition to the monomer units corresponding to the vinyl monomer A and the monomer units corresponding to the vinyl monomer B, wherein the (meth)acrylic esters are each represented by following Formula (2): 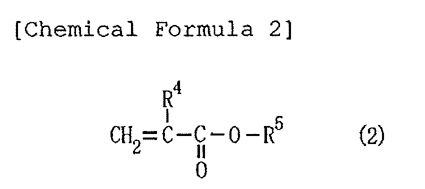 wherein R⁴ represents hydrogen atom or methyl group; and R⁵ represents a hydrocarbon group which has 1 to 15 carbon atoms and which may contain a hydrocarbon-substituted oxy group.
